# EUROPÄISCHE PATENTSCHRIFT

(11) **EP 1 896 273 B1**
(45) Veröffentlichungstag und Bekanntmachung des Hinweises auf die Patenterteilung: **03.12.2008**
(21) Anmeldenummer: 06763933.6
(22) Anmeldetag: 28.06.2006
(51) Int. Cl.: B60B 17/00

(54) **VORRICHTUNG ZUM BREMSEN EINES SCHIENENFAHRZEUGES**
DEVICE FOR BRAKING A RAIL VEHICLE
DISPOSITIF DE FREINAGE D'UN VEHICULE SUR RAILS

(30) Priorität: 29.06.2005 DE 102005030366
(43) Veröffentlichungstag der Anmeldung: 12.03.2008
(73) Patentinhaber: SIEMENS AKTIENGESELLSCHAFT, 80333 München (DE)
(72) Erfinder: WEBER, Franz-Josef, A-8054 Graz (AT); ZENZ, Rüdiger, A-8010 Graz (AT)
(86) Internationale Anmeldenummer: PCT/EP2006/063637
(87) Internationale Veröffentlichungsnummer: WO 2007/000467

(56) Entgegenhaltungen:
- DE-A1- 2 449 043
- DE-B- 1 202 303
- US-A- 2 742 107

## Beschreibung

Die Erfindung betrifft eine Vorrichtung zum Bremsen eines Schienenfahrzeuges mit einem Bremskörper, der an ein Rad anpressbar ist, entsprechend dem Oberbegriff des Anspruchs 1 und wie sie aus dem Dokument DE 2449043A bekannt ist.

Neben anderen Bremssystemen weist ein Schienenfahrzeug eine Reibungsbremse auf. Dabei wird ein Bremskörper an ein Rad oder an ein Bauteil, das sich mit dem Rad dreht, angepresst. Bei einer bekannten Klotzbremse wird ein Bremsklotz an die Lauffläche eines Schienenrades gepresst. Dadurch wird die Lauffläche mechanisch belastet und es erfolgt ein Wärmeeintrag in das Rad über die Lauffläche. Das führt dazu, dass die Lebensdauer des Rades verkürzt wird. Die Lauffläche kann nämlich durch die Bremsvorgänge rau werden. Es können sogar Rillen entstehen. Das führt dann zu erhöhten Fahrgeräuschen, die unerwünscht sind.

Es ist auch schon vorgeschlagen worden, an Schienenfahrzeugen Scheibenbremsen einzusetzen. Dabei wird ein ruhender Bremskörper auf eine sich mit dem Rad drehende Bremsscheibe aufgepresst.

Schließlich ist bei kleinen Rädern auch bereits vorgeschlagen worden, dass ein sich nicht drehender Bremskörper direkt mit der Stirnseite des Rades in Kontakt tritt, um das Schienenfahrzeug abzubremsen. Das ist bei diesen kleinen Rädern möglich, da sie als Scheibenräder ausgebildet sind und keine Konturen aufweisen.

Übliche Eisenbahnräder bestehen radial von der Achse zur Schiene hin gesehen aus der Radnabe, dem Radsteg, dem Radkranz und dem Spurkranz.

Der Erfindung liegt die Aufgabe zugrunde, eine Vorrichtung zum Bremsen eines Schienenfahrzeuges anzugeben, die die genannten Vorteile einer Scheibenbremse bietet, nämlich dass die Lauffläche des Rades nicht beschädigt werden kann, und die trotzdem kostengünstig und technisch einfach aufgebaut ist. Sie soll darüber hinaus auch bei großen Eisenbahnrädern, die Konturen aufweisen, zuverlässig funktionieren.

Die Aufgabe wird gemäß der Erfindung unit dem Merkmalen des Anspruchs 1 gelöst.

Es kommt also darauf an, dass das Rad selbst schon so gefertigt ist, dass es als drehende Bremsscheibe einer Scheibenbremse dienen kann. Der Bremskörper ist dann in der Regel ein nicht drehender Bremskörper, der in axialer Richtung auf die Bremsscheibe gedrückt wird.

Es wird der Vorteil erzielt, dass einerseits die nachteilige Belastung der Lauffläche des Rades durch eine Klotzbremse vermieden wird, und dass andererseits die bei einer Scheibenbremse bisher erforderliche drehende Scheibe nicht länger notwendig ist. Man erzielt vorteilhaft eine genauso gute Bremswirkung wie eine Scheibenbremse bei deutlich geringerem technischem Aufwand und damit bei geringeren Kosten. Darüber hinaus wird eine deutlich bessere Bremswirkung erreicht als bei einem direkten Anpressen des Bremskörpers auf die Lauffläche des Rades. Es kommt durch die Ausgestaltung eines Oberflächenbereiches an der Stirnseite des Rades als Reibring vorteilhaft zu einem deutlich kleineren Verschleiß als bei einem direkten Bremsen an der Radoberfläche.

Beispielsweise befindet sich der als Reibring dienende Oberflächenbereich am Radsteg. Nach einem anderen Beispiel befindet er sich am Radkranz. Nach einem dritten Beispiel befindet sich der als Reibring dienende Oberflächenbereich an der Radnabe.

Die drei Varianten sind hinsichtlich ihrer Bremswirkung in gleicher Weise geeignet.

Durch den als Reibring dienenden Oberflächenbereich ist das Rad beispielsweise nicht dicker als sonst üblich. Schon bei der Herstellung des Rades erhält es selbst den gewünschten Oberflächenbereich.

Beispielsweise kann aber das Rad bei dem als Reibring dienen-den Oberflächenbereich dicker sein als sonst. Auch bei dieser Variante ist der gewünschte Oberflächenbereich Teil des Radkörpers selbst.

Beispielsweise weist das Rad an dem als Reibring dienenden Oberflächenbereich eine Ausnehmung auf, die bei an das Rad angepresstem Bremskörper überdeckt, aber nicht ausgefüllt ist und einen Kühlkanal bildet. Die beim Bremsvorgang entstehende Wärmeenergie wird dann durch die Luft in diesem Hohlraum aufgenommen.

Beispielsweise sind am Rad am als Reibring dienenden Oberflächenbereich Kühlrippen angeformt. Damit wird der Vorteil erzielt, dass die beim Bremsen entstehende Wärmeenergie von der Luft zwischen den Kühlrippen aufgenommen wird.

Beispielsweise ist in dem Rad am als Reibring dienenden Oberflächenbereich als Verschleißmarke eine Rille angeordnet. Wenn diese Rille nicht mehr zu sehen ist, muss von einer Abnutzung ausgegangen werden, so dass eine Reparatur oder ein Austausch erforderlich ist.

Mit der Vorrichtung zum Bremsen eines Schienenfahrzeuges nach der Erfindung wird der Vorteil erzielt, dass bei geringem Verschleiß am Rad und ohne einer aufwändigen und teueren Bremsscheibe ein zuverlässiges und schnelles Abbremsen stets gewährleistet ist.

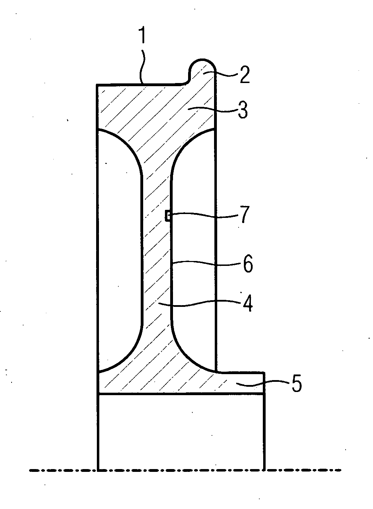

Die Zeichnung zeigt einen Schnitt durch ein Schienenrad von der Achse zur Lauffläche, wobei das Rad einen als Reibring dienenden Oberflächenbereich aufweist:

Das Schienenrad weist eine Lauffläche 1 auf, die mit der Schiene in Kontakt tritt. Im Bereich der Lauffläche 1 befindet sich der Spurkranz 2, der das Rad auf der Schiene hält. Lauffläche 1 und Spurkranz 2 sind Bestandteil des Radkranzes 3. Zum Mittelpunkt des Rades hin schließt sich der Radsteg 4 an. Im Bereich der Achse befindet sich die Radnabe 5. Ein als Reibring dienender Oberflächenbereich 6 befindet sich am Radsteg 4. Dieser Oberflächenbereich 6 zeichnet sich durch eine besondere Oberflächenbehandlung aus. Im Oberflächenbereich 6 ist eine Rille als Verschleißmarke 7 angeordnet.

Zum Bremsen wird an den Oberflächenbereich 6 ein nicht gezeigter Bremskörper axial angepresst.

Mit der gezeigten Vorrichtung zum Bremsen kommt man bei gleicher Wirkung ohne eine übliche Radbremsscheibe aus.

## Patentansprüche

1. Vorrichtung zum Bremsen eines Schienenfahrzeuges mit einem Rad und einem Bremskörper, der an das Rad anpressbar ist, wobei das Rad einen als Reibring dienenden Oberflächenbereich (6) aufweist, an den der Bremskörper anpressbar ist, **dadurch gekennzeichnet, dass** das Rad an dem als Reibring dienenden Oberflächenbereich eine Ausnehmung aufweist, die bei an das Rad angepresstem Bremskörper überdeckt aber nicht ausgefüllt ist und einen Kühlkanal bildet.

2. Vorrichtung nach Anspruch 1, **dadurch gekennzeichnet, dass** sich der als Reibring dienende Oberflächenbereich (6) am Radsteg (4) befindet.

3. Vorrichtung nach Anspruch 1, **dadurch gekennzeichnet, dass** sich der als Reibring dienende Oberflächenbereich am Radkranz (3) befindet.

4. Vorrichtung nach Anspruch 1, **dadurch gekennzeichnet, dass** sich der als Reibring dienende Oberflächenbereich an der Radnabe (5) befindet.

5. Vorrichtung nach einem der Ansprüche 1 bis 4, **dadurch gekennzeichnet, dass** das Rad bei dem als Reibring dienenden Oberflächenbereich dicker ist als sonst.

6. Vorrichtung nach einem der Ansprüche 1 bis 5, **dadurch gekennzeichnet, dass** am Rad am als Reibring dienenden Oberflächenbereich Kühlrippen angeformt sind.

7. Vorrichtung nach einem der Ansprüche 1 bis 6, **dadurch gekennzeichnet, dass** in dem Rad am als Reibring dienenden Oberflächenbereich (6) als Verschleißmarke (7) eine Rille angeordnet ist.

## Claims

1. Device for braking a rail vehicle, comprising a wheel and braking element which can be pressed against the wheel, wherein the wheel has a surface area (6) which serves as a friction ring and against which the braking element can be pressed **characterized in that,** on the surface area which serves as a friction ring, the wheel has a recess which, when the braking element is pressed against the wheel, is covered but not filled and forms a cooling duct.

2. Device according to Claim 1, **characterized in that** the surface area (6) which serves as a friction ring is located on the wheel web (4).

3. Device according to Claim 1, **characterized in that** the surface area which serves as a friction ring is located on the wheel rim (3).

4. Device according to Claim 1, **characterized in that** the surface area which serves as a friction ring is located on the wheel hub (5).

5. Device according to one of Claims 1 to 4, **characterized in that** the wheel is thicker at the surface area which serves as a friction ring than otherwise.

6. Device according to one of Claims 1 to 5, **characterized in that** cooling ribs are integrally formed on the wheel, on the surface area which serves as a friction ring.

7. Device according to one of Claims 1 to 6, **characterized in that** a groove is arranged as a wear mark (7) in the wheel, on the surface area (6) which serves as a friction ring.

## Revendications

1. Dispositif de freinage d'un véhicule sur rail ayant une roue et une pièce de frein, qui peut être appliquée à la roue, la roue ayant une partie (6) de surface qui sert d'anneau de friction et sur laquelle la pièce de frein peut être appliquée, **caractérisé en ce que** la roue a, sur la partie de surface servant d'anneau de friction, un évidement qui, lorsque la pièce de frein est appliquée à la roue, est recouvert mais n'est pas rempli et forme un canal de refroidissement.

2. Dispositif suivant la revendication 1, **caractérisé en ce que** la partie (6) de surface servant d'anneau de friction se trouve sur l'âme (4) de la roue.

3. Dispositif suivant la revendication 1, **caractérisé en ce que** la partie de surface servant d'anneau de friction se trouve sur la jante (3) de la roue.

4. Dispositif suivant la revendication 1, **caractérisé en ce que** la partie de surface servant d'anneau de friction se trouve sur le moyeu (5) de la roue.

5. Dispositif suivant l'une des revendications 1 à 4, **caractérisé en ce que** la roue est, dans la partie de surface servant d'anneau de friction, plus épaisse qu'ailleurs.

6. Dispositif suivant l'une des revendications 1 à 5, **caractérisé en ce que** des nervures de refroidissement sont formées sur la roue sur la partie de surface servant d'anneau de friction.

7. Dispositif suivant l'une des revendications 1 à 6, **caractérisé en ce qu'**une rainure est disposée dans la roue sur la partie (6) de surface servant d'anneau de friction en tant que repère (7) d'usure.
